# DEMANDE DE BREVET EUROPEEN

(11) **EP 2 093 551 A2**
(43) Date de publication de la demande: **26.08.2009**
(21) Numéro de dépôt: 09290118.0
(22) Date de dépôt: 18.02.2009
(51) Int. Cl.: G01L 1/22, G01L 5/00

(54) **Système de mesure des déformations par mise en compression élastique d'une jauge**

(30) Priorité: 22.02.2008 FR 0800989
(71) Demandeur: SNR Roulements, 74000 Annecy (FR)
(72) Inventeur: Ehinger, Pierre, 74210 Faverges (FR); Grangier, Julien, 74150 Rumilly (FR); Maucout, Denis, 74230 Dingy Saint Clair (FR)
(74) Mandataire: Sayettat, Julien Christian

(57) **Abrégé**

L'invention concerne un système de mesure des déformations d'une zone (6) d'un élément structurel (1), ledit système comprenant au moins une jauge comprenant un substrat rigide (8) sur la surface supérieure duquel est formé au moins un motif (7) d'un matériau apte à se déformer en délivrant un signal représentatif desdites déformations, ledit substrat étant agencé pour transmettre au motif (7) les déformations de la zone (6) lorsque la surface inférieure dudit substrat est reportée sur ladite zone, ledit système comprenant un élément déformable (9) et un dispositif de compression (12, 19) dudit élément sur la surface supérieure du substrat (8) de sorte que ledit substrat puisse être sollicité par les déformations de la zone (6), ledit système comprenant en outre des moyens de fixation (14, 17) dudit dispositif de compression sur l'élément structurel (1), lesdits moyens de fixation étant destinés à assurer le maintien dudit substrat sur la zone (6) par l'intermédiaire de l'élément déformable (9) qui est comprimé sur la surface supérieure du substrat (8).

## Description

L'invention concerne un système de mesure des déformations d'un élément structurel ainsi qu'un palier à roulement équipé d'un tel système de mesure.

En particulier, l'invention s'applique à des roulements de roues de véhicule automobile, la bague fixe dudit roulement étant destinée à être solidarisée au châssis dudit véhicule, la roue étant destinée à être montée en rotation par l'intermédiaire de la bague tournante dudit roulement, et deux rangées de billes étant prévues entre lesdites bagues.

Dans de nombreuses applications, notamment en relation avec les systèmes d'assistance et de sécurité tels que l'ABS ou l'ESP, il est nécessaire de déterminer les efforts qui s'appliquent lors des déplacements du véhicule à l'interface entre la roue et la chaussée sur laquelle ladite roue tourne.

En particulier, la détermination de ces efforts peut être réalisée par une mesure des déformations de la bague fixe qui sont induites par le passage des corps roulants. En effet, l'amplitude de ces déformations est représentative des efforts transmis par le roulement.

Pour ce faire, notamment le document EP-1 176 409, prévoit d'instrumenter des zones de la bague fixe en associant sur elles au moins une jauge de mesure desdites déformations. En particulier, la jauge comprend un substrat rigide sur la surface supérieure duquel est formé au moins un motif d'un matériau apte à se déformer en délivrant un signal représentatif desdites déformations, la surface inférieure dudit substrat étant collée sur la zone de sorte à transmettre au motif les déformations de ladite zone.

Toutefois, la mise en oeuvre de l'association des jauges par collage présente un certain nombre de difficultés. Tout d'abord, elle nécessite une préparation préalable de la zone, notamment un lavage, pour éliminer les traces de lubrifiants qui sont utilisés pour la fabrication du roulement. Ensuite, la colle est délicate à appliquer, notamment relativement à la géométrie du film de colle utilisé et à la reproductibilité de celle-ci. Enfin, la polymérisation de la colle nécessite un chauffage du roulement qui, outre son coût, peut solliciter négativement notamment les joints d'étanchéité équipant le roulement.

En outre, la colle est placée à l'interface entre le substrat et la zone, de sorte que la transmission des déformations est réalisée au travers d'elle. Par conséquent, les difficultés de mise en oeuvre de la colle sont d'autant plus critiques que les caractéristiques de l'interface vont directement influencer la mesure des déformations. C'est pourquoi, il est nécessaire de réaliser un étalonnage de la jauge après le collage du substrat. Toutefois, outre sa complexité de mise en oeuvre, cet étalonnage n'est pas satisfaisant puisque la colle est soumise à un vieillissement qui fait varier ses caractéristiques dans le temps.

Par ailleurs, alors que les variations de l'amplitude des déformations à mesurer sont faibles, les déformations transmises par la colle sont amorties et distordues. En outre, la colle oppose une résistance à la déformation de la zone. L'utilisation d'une interface de colle induit donc une augmentation de la difficulté à exploiter les mesures effectuées.

L'invention vise à résoudre les problèmes de l'art antérieur en proposant notamment un système de mesure des déformations d'une zone d'un élément structurel dans lequel l'interface de colle est remplacée par une mise en compression élastique de la jauge.

A cet effet, et selon un premier aspect, l'invention propose un système de mesure des déformations d'une zone d'un élément structurel, ledit système comprenant au moins une jauge comprenant un substrat rigide sur la surface supérieure duquel est formé au moins un motif d'un matériau apte à se déformer en délivrant un signal représentatif desdites déformations, ledit substrat étant agencé pour transmettre au motif les déformations de la zone lorsque la surface inférieure dudit substrat est reportée sur ladite zone, ledit système comprenant un élément déformable et un dispositif de compression dudit élément sur la surface supérieure du substrat de sorte que ledit substrat puisse être sollicité par les déformations de la zone, ledit système comprenant en outre des moyens de fixation dudit dispositif de compression sur l'élément structurel, lesdits moyens de fixation étant destinés à assurer le maintien dudit substrat sur la zone par l'intermédiaire de l'élément déformable qui est comprimé sur la surface supérieure du substrat.

Selon un deuxième aspect, l'invention propose un palier à roulement comprenant un organe fixe, un organe tournant et au moins une rangée de corps roulants disposée entre lesdits organes pour permettre leur rotation relative, ledit organe fixe comprenant au moins une zone déformable élastiquement par les efforts induits par le passage des corps roulants lors de la rotation de l'organe tournant, ledit palier étant équipé d'au moins un tel système de mesure des déformations, la surface inférieure du substrat étant reportée sur la zone et les moyens de fixation assurant le maintien dudit substrat sur la zone par l'intermédiaire de l'élément déformable qui est comprimé sur la surface supérieure du substrat afin que ledit substrat soit sollicité par les déformations de la zone.

D'autres objets et avantages de l'invention apparaîtront dans la description qui suit, faite en référence aux figures annexées, dans lesquelles :
- les figures 1 sont des représentations schématiques d'un système de mesure selon un premier mode de réalisation, respectivement dans un état au repos (figure 1a) et dans un état de déformation essentiellement transversale (figure 1 b) ;
- la figure 2 est une vue en perspective éclatée et partiellement coupée d'un roulement équipé d'un système de mesure selon le premier mode de réalisation ;
- les figures 3 sont des représentations schématiques d'un système de mesure selon un deuxième mode de réalisation, respectivement dans un état au repos (figure 3a) et dans un état de déformation (figure 3b) ;
- la figure 4 est une vue en perspective et partiellement coupée montrant l'implantation sur la bague fixe d'un roulement d'un système de mesure selon le deuxième mode de réalisation.

En relation avec ces figures, on décrit ci-dessous un palier à roulement de roue de véhicule automobile comprenant un organe extérieur fixe 1 pourvu d'une bride 2 d'association au châssis du véhicule, un organe intérieur tournant 3 comprenant un bride 4 sur laquelle est destinée à être montée la roue, et deux rangées de billes 5 qui sont disposées respectivement dans un chemin de roulement. Toutefois, l'invention peut concerner d'autres types de palier à roulement, ainsi que des paliers pour d'autres applications automobiles ou autres.

Lors du déplacement du véhicule, la roue tourne sur la chaussée en induisant des efforts à leur interface, lesdits efforts étant transmis au châssis par l'intermédiaire du palier. Par conséquent, la détermination de ces efforts, notamment en vu d'alimenter les systèmes d'assistance et de sécurité du véhicule, peut être réalisée en estimant temporellement les composants du torseur d'efforts qui s'applique sur le palier.

En particulier, lors du passage des billes, le torseur d'efforts induit des déformations de l'organe fixe 1 dont la mesure peut être exploitée afin de calculer l'estimation des composants dudit torseur. En effet, le passage des corps roulants 5 induit des efforts sur la périphérie extérieure de l'organe fixe 1 de sorte qu'au moins une zone 6 de ladite périphérie se déforme élastiquement de façon périodique autour d'une valeur moyenne.

En relation avec un tel palier à roulement, on décrit ci-dessous deux modes de réalisations d'un système de mesure des déformations. Toutefois, un système de mesure selon l'invention peut également être utilisé pour équiper un autre type d'organes mécaniques, notamment de transmission d'efforts, de sorte à mesurer les déformations d'une zone d'un élément structurel dudit organe.

Le système de mesure comprend au moins une jauge de mesure des déformations. Selon une réalisation, la jauge peut comprendre un ou des motifs 7 à base d'éléments résistifs, notamment piézorésistifs ou magnétostrictifs, qui sont disposés sur la surface supérieure d'un substrat 8 rigide de support, la surface inférieure dudit substrat étant reportée sur une zone 6 déformable élastiquement. Ainsi, le substrat 8 est agencé pour transmettre au motif 7 les déformations de la zone 6, ledit motif étant apte à se déformer en délivrant un signal représentatif desdites déformations.

En particulier, une jauge comprenant un motif 7 formé d'une barrette de pâtes de matériau espacées sur un substrat 8 peut être utilisée pour délivrer un signal temporel pseudo sinusoïdal autour d'une valeur moyenne, ledit signal étant fonction des déformations de la zone 6. Ainsi, le signal peut être conditionné pour exploiter la composante pseudo sinusoïdale qui est représentative de l'amplitude des déformations induites par le passage des corps roulants 5.

Dans des exemples de réalisations, les motifs 7 sont déposés par sérigraphie ou électrolyse sur un substrat 8 en céramique ou en Kapton. Toutefois, l'invention n'est pas limitée à une réalisation particulière des jauges pour mesurer les déformations de la surface extérieure de l'organe fixe 1.

Dans les modes de réalisation représentés, le système de mesure comprend deux jauges dont les motifs 7 sont disposés respectivement à proximité du plan radial contenant une rangée de corps roulants 5, lesdits motifs étant supportés par respectivement un substrat 8. En variante, on peut prévoir une seule jauge comprenant un même substrat 8 pour supporter les deux motifs 7.

En outre, l'organe fixe 1 comprend quatre zones 6 qui sont équiréparties sur sa périphérie, chacune de ces zones pouvant être équipée d'un système de mesure des déformations. Par ailleurs, pour faciliter la disposition du substrat rigide 8 les zones 6, celles-ci comprennent un méplat.

Le système de mesure comprend également un élément déformable 9 et un dispositif de compression dudit élément sur la surface supérieure du substrat 8. En outre, le système comprend des moyens de fixation du dispositif de compression sur l'organe fixe 1, lesdits moyens de fixation assurant le maintien du substrat 8 sur la zone 6 par l'intermédiaire de l'élément déformable 9 qui est comprimé sur la surface supérieure du substrat 8.

Ainsi, l'effort de compression peut être agencé pour que le substrat 8 soit sollicité par les déformations de la zone 6, et ce sans prévoir une interface de collage entre ladite zone et la surface inférieure dudit substrat. En particulier, la surface inférieure du substrat 8 peut être reportée directement sur la zone 6.

Dans les modes de réalisation représentés, le système de mesure comprend un élément déformable 9 pour chacun des substrats 8. En variante, un élément déformable commun peut être prévu.

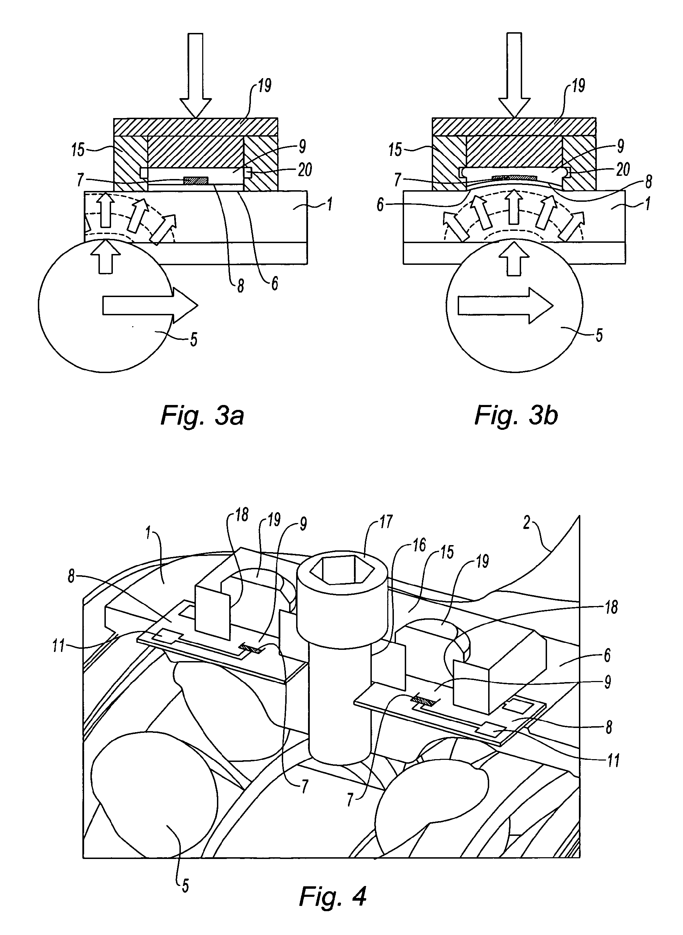

Par ailleurs, pour améliorer la transmission des déformations, l'élément déformable 9 peut être comprimé sur le motif 7 afin d'augmenter l'effort de plaquage dudit motif sur la zone 6. Pour ce faire, l'élément déformable 9 est agencé pour recouvrir le motif 7, ainsi qu'éventuellement tout ou partie de la surface supérieure du substrat 8 qui lui est adjacente. En particulier, comme représenté sur la figure 4, le système de mesure de déformation peut être agencé de façon suffisamment compacte pour laisser libre les bornes 11 de connexion électrique des motifs 7.

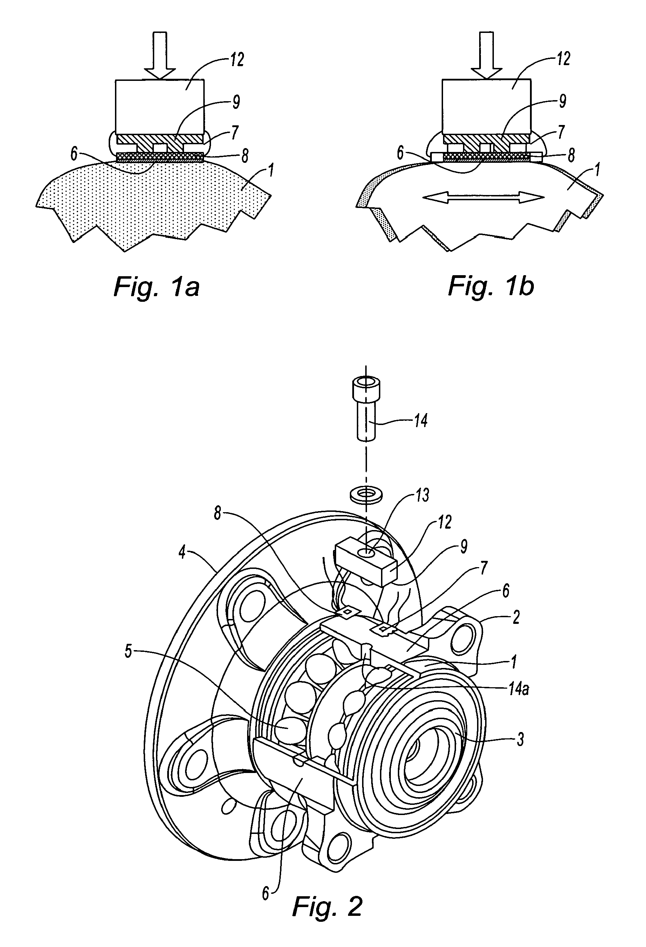

En relation avec les figures 1 et 2, on décrit ci-dessous un premier mode de réalisation d'un système de mesure des déformations dans lequel le dispositif de compression intègre les moyens de fixation.

Pour ce faire, le dispositif de compression comprend une bride 12 sur la surface inférieure de laquelle l'élément déformable 9 est disposé. Dans cette réalisation, l'élément déformable 9 peut être réalisé en matériau élastiquement déformable, notamment en élastomère de faible viscosité, par exemple avec une géométrie parallélépipédique d'épaisseur réduite.

La bride 12 de compression est commune pour les deux éléments déformables 9 qui sont associés, par exemple par collage, de part et d'autre de la surface inférieure de ladite bride. En particulier, trois côtés de la périphérie d'un élément déformable 9 sont affleurant des bords de la bride 12, de sorte à permettre un fluage dudit élément au-delà de ladite bride.

En outre, la bride 12 est percée d'un orifice central 13 dans lequel une vis de fixation 14 est destinée à être insérée. Ainsi, en prévoyant un orifice taraudé 14a complémentaire dans l'organe fixe 1, on peut assurer un serrage de ladite bride sur ledit organe fixe. En particulier, l'orifice taraudé 14a est formé entre les chemins de roulements de sorte à ne pas interférer sur le fonctionnement du palier.

Dans cette réalisation, la force de serrage impact directement sur l'effort de plaquage qui est exercé à l'interface entre le substrat 8 et la zone 6 par l'intermédiaire de l'élément déformable 9. En particulier, comme représenté sur la figure 1b, l'effort de compression peut être agencé pour, en cas de déformation transversale de la zone 6, empêcher le glissement du substrat 8 sur ladite zone de sorte à améliorer la transmission de ces déformations.

Dans ce cas, la déformation transversale de l'élément 9 permet de compenser le désalignement entre la bride 12 et la zone 6, notamment en permettant le déplacement du motif 7 à l'intérieur dudit élément (voir figure 1b). En outre, le glissement peut être réduit par augmentation du coefficient de frottement entre la surface inférieure du substrat 8 et la zone 6, notamment par traitement de surface ou par adjonction d'une interface de friction.

En relation avec les figures 3 et 4, on décrit ci-dessous un deuxième mode de réalisation d'un système de mesure des déformations comprenant un module 15 dans lequel le dispositif de compression est formé, ledit module intégrant les moyens de fixation. Dans cette réalisation, l'effort de fixation du module 15 sur l'organe fixe 1 est donc dissocié de l'effort de compression qui est exercé sur l'élément déformable 9. En outre, la fixation du module 15 permet un positionnement préalable du substrat 8 à la fois sur la zone 6 et par rapport audit module, ledit substrat étant ensuite plaqué sur la zone 6 par mise en compression de l'élément déformable 9 sur lui.

Dans le mode de réalisation représenté, le module 15 est formé d'un corps pourvu d'un orifice central 16 dans lequel une vis de fixation 17 à l'organe fixe 1 est montée. Par ailleurs, de part et d'autre de l'orifice 16, le corps comprend deux logements 18 débouchant chacun entre une ouverture supérieure et une ouverture inférieure.

Ainsi, après la fixation du module 15 en disposant un motif 7 en regard d'un logement 18, un élément déformable 9 est introduit dans le logement 18 pour être disposé dans l'ouverture inférieure. En outre, un dispositif de compression équipe l'ouverture supérieure pour comprimer l'élément déformable 9 sur le motif 7. Sur les figures, chaque orifice est équipé d'un dispositif de compression, mais un dispositif de compression commun pourrait être envisagé.

L'élément déformable 9 peut être réalisé en matériau élastiquement déformable dont la géométrie est agencée pour être confinée dans l'ouverture inférieure. Le dispositif de compression peut alors comprendre un couvercle 19 qui est serré sur ledit élément par l'intermédiaire d'une vis de sorte à exercer l'effort de compression souhaité. En variante, un sertissage peut être utilisé.

En outre, comme représenté sur les figures 3, le logement 18 peut comprendre une réserve latérale 20 d'expansion pour l'élément déformable 9 de sorte à compenser les variations de volume subies par ledit élément lors de ses déformations. Ainsi, on peut conserver les caractéristiques élastiques de l'élément déformable 9, notamment en contrôlant son fluage et sa raideur.

Par son confinement dans le logement 18 et son éventuelle expansion contrôlée, l'élément déformable 9 vient plaquer de manière homogène, notamment relativement au gradient et à la pression, le substrat 8 sur la zone 6.

Il en résulte donc que le substrat 8 épouse parfaitement la surface plane de la zone 8 et suit donc en permanence les déformations à mesurer.

En particulier, comme représenté sur la figure 3b, un gonflement de la zone 6 qui est occasionné par un effort ponctuel, se transmet jusqu'au motif 7 qui subit alors une extension proportionnelle à l'effort appliqué. Ensuite, l'élément déformable 9 permet le retour du substrat 8 dans sa position initiale.

En outre, le substrat 8 peut glisser sur la zone 6 de sorte à être sollicitée sans résistance par les déformations de celle-ci. Il en résulte que le motif 7 subi ces déformations avec un minimum de perte et donc que la pertinence du signal délivré s'en trouve amélioré.

En variante de cette réalisation, l'élément déformable 9 peut comprendre un fluide compressible, notamment de l'air, qui est disposé dans le logement 18. Le dispositif de compression peut comprendre alors une valve qui est formée dans l'ouverture supérieure du logement 18 de sorte à exercer un effort de plaquage du substrat 8 sur la zone 6 par l'intermédiaire du fluide comprimé.

## Revendications

1. Système de mesure des déformations d'une zone (6) d'un élément structurel (1), ledit système comprenant au moins une jauge comprenant un substrat rigide (8) sur la surface supérieure duquel est formé au moins un motif (7) d'un matériau apte à se déformer en délivrant un signal représentatif desdites déformations, ledit substrat étant agencé pour transmettre au motif (7) les déformations de la zone (6) lorsque la surface inférieure dudit substrat est reportée sur ladite zone, ledit système étant **caractérisé en ce qu'**il comprend un élément déformable (9) et un dispositif de compression (12, 19) dudit élément sur la surface supérieure du substrat (8) de sorte que ledit substrat puisse être sollicité par les déformations de la zone (6), ledit système comprenant en outre des moyens de fixation (14, 17) dudit dispositif de compression sur l'élément structurel (1), lesdits moyens de fixation étant destinés à assurer le maintien dudit substrat sur la zone (6) par l'intermédiaire de l'élément déformable (9) qui est comprimé sur la surface supérieure du substrat (8).

2. Système de mesure selon la revendication 1, **caractérisé en ce que** le dispositif de compression (12) intègre les moyens de fixation (14).

3. Système de mesure selon la revendication 2, **caractérisé en ce que** le dispositif de compression comprend une bride (12) sur la face inférieure de laquelle l'élément déformable (9) est disposé, ladite bride étant pourvue d'un moyen de fixation (14) par serrage sur l'élément structurel (1).

4. Système de mesure selon la revendication 1, **caractérisé en ce qu'**il comprend un module (15) dans lequel le dispositif de compression (19) est formé, ledit module intégrant les moyens de fixation (17).

5. Système de mesure selon la revendication 4, **caractérisé en ce que** le module (15) comprend au moins un logement (18) dans l'ouverture inférieure duquel l'élément déformable (9) est disposé, l'ouverture supérieure dudit logement étant équipée du dispositif de compression (19).

6. Système de mesure selon la revendication 5, **caractérisé en ce que** le logement (18) comprend au moins une réserve latérale (20) d'expansion pour l'élément déformable (9).

7. Système de mesure selon l'une quelconque des revendications 1 à 6, **caractérisé en ce que** l'élément déformable (9) est réalisé à base d'un matériau élastiquement déformable.

8. Système de mesure selon l'une quelconque des revendications 4 à 6, **caractérisé en ce que** l'élément déformable (9) comprend un fluide compressible.

9. Palier à roulement comprenant un organe fixe (1), un organe tournant (3) et au moins une rangée de corps roulants (5) disposée entre lesdits organes pour permettre leur rotation relative, ledit organe fixe comprenant au moins une zone (6) déformable élastiquement par les efforts induits par le passage des corps roulants (5) lors de la rotation de l'organe tournant (3), ledit palier étant équipé d'au moins un système de mesure des déformations selon l'une quelconque des revendications 1 à 8, la surface inférieure du substrat (8) étant reportée sur la zone (6) et les moyens de fixation (14, 17) assurant le maintien dudit substrat sur la zone (6) par l'intermédiaire de l'élément déformable (9) qui est comprimé sur la surface supérieure du substrat (8) afin que ledit substrat soit sollicité par les déformations de la zone (6).

10. Palier à roulement selon la revendication 9, **caractérisé en ce que** l'organe fixe (1) comprend des moyens complémentaires (14a) aux moyens de fixation (14).

11. Palier à roulement selon la revendication 9 ou 10, **caractérisé en ce que** la surface inférieure du substrat (8) est reportée directement sur la zone (6).

12. Palier à roulement selon l'une quelconque des revendications 9 à 11, **caractérisé en ce que** l'élément déformable (9) est comprimé sur le motif (7).

13. Palier à roulement selon la revendication 12, **caractérisé en ce qu'**il comprend deux rangées de corps roulants (5), le système de mesure comprenant deux motifs (7) de matériau qui sont disposés respectivement à proximité du plan radial contenant une rangée, le système de mesure comprenant en outre deux éléments déformables (9) qui sont comprimés sur respectivement un motif (7).
